# EUROPEAN PATENT APPLICATION

(11) **EP 2 034 736 A1**
(43) Date of publication of application: **11.03.2009**
(21) Application number: 07017613.6
(22) Date of filing: 07.09.2007
(51) Int. Cl.: H04N 7/24

(54) **Method and device for processing data and communication system comprising such device**

(71) Applicant: Nokia Siemens Networks Oy, 02610 Espoo (FI)
(72) Inventor: Amon, Peter, 81675 München (DE); Riedl, Johannes, 84030 Ergolding (DE)
(74) Representative: Bruglachner, Thomas E.

(57) **Abstract**

A method and a device for processing data are provided, said data comprising a hierarchical configuration, said method comprising the steps of (i) the data is prioritized at least according to its hierarchical configuration; (ii) the data is prioritized by adding a priority identifier; and (iii) the data is conveyed through a network utilizing said priority identifier.

## Description

The invention relates to a method and to a device for processing data and to a communication system comprising such a device.

Packet-oriented networks, e.g., Ethernet or IP-networks, offer services, e.g., Video-On-Demand, Broadcast-TV, with an increasing demand for bandwidth. In addition, such high bandwidth is required end-to-end throughout the whole network in order to ensure the Quality of Service (QoS) required.

Regarding in particular the video services mentioned, packet loss leads to a dramatic loss of information over the transport network and significantly impairs the service quality and hence reduces the user's acceptance. Hence, in video processing scenarios packet loss probabilities are preferably below 10⁻⁷.

If a bandwidth bottleneck occurs, packet loss may easily reach an amount of several percent which degrades video quality beyond a level that is deemed acceptable. Therefore, such bandwidth shortages have to be avoided if possible.

A critical line section regarding bandwidth shortage is the DSL connection between a Digital Subscriber Line Access Multiplexer (DSLAM) and the user (Customer Premises Equipment, CPE). Once High Definition TV (HDTV) reaches single homes in a broad sense, DSL line(s) may be subject to bandwidth shortage due to the increasing traffic.

However, said bottleneck situation may also occur within an access network, aggregation network, backbone network or metro network.

The problem to be solved is to overcome the disadvantages as stated before and in particular to provide an approach that allows continuity of a service, in particular a video service, even in case of bandwidth shortage.

This problem is solved according to the features of the independent claims. Further embodiments result from the depending claims.

In order to overcome this problem, a method for processing data is provided, said data comprising a hierarchical configuration, said method comprising the steps:
- the data is prioritized at least according to its hierarchical configuration;
- the data is prioritized by utilizing a priority identifier;
- the data is conveyed through a network utilizing said priority identifier.

It is to be noted that said identifier may be added or an existing piece of information may be used as such an priority identifier. Furthermore, an already existing (priority) identifier may be used or set.

Hence it is possible to prioritize the data and to ensure that the network or components within the network is/are capable of conveying the data according to the priority identifier used. The hierarchically or progressively coded data can be conveyed in prioritized data streams such that, e.g., a base information (base layer) may always arrive at its destination whereas additional information (enhancement layer) may be dropped in case of bandwidth shortage within the network.

It is to be noted that data refers to all kind of data, in particular video data, audio data, pictures, control information or various user data. Referring to video data may also refer to a combination of audio and video information like, e.g., Television or Video-On-Demand.

It is further to be noted that the data may be conveyed via data packets, wherein a stream of a particular layer may be divided into several packets (all such packets are then associated with the particular layer, e.g., base layer or enhancement layer).

Advantageously, a certain minimum service quality of a service, in particular a video service, can be guaranteed to the user. Furthermore, it is possible to prioritize particular services (or portions thereof) above other services.

According to an embodiment, a signaling based on the priority identifier is conducted by a network.

Hence the information of the priority identifier can be utilized directly on a network level, wherein the network can be completely unaware of the media conveyed.

In an embodiment, the network is a packet-oriented network, e.g., the Ethernet or an IP network. The network may in particular comprises Multi Protocol Label Switching (MPLS) services.

In another embodiment, the data comprises audio and/or video data.

In a further embodiment, the hierarchical configuration comprises a base layer and at least one enhancement layer.

Such hierarchical (also referred to as "progressive") configuration allows the data to comprise said base layer, which already provides all necessary information, e.g., of a television program, but at a low quality (e.g., with low video and/or audio resolution or sampling rate). However, to a user, all information (picture and sound) is already provided by said base layer and s/he can watch the program without any interruption or delay. A full range of quality may be successively provided by additional stages of enhancement layers, e.g., a first enhancement layer and a second enhancement layer. In case the base layer and the first enhancement layer are received at, e.g., a set-top-box at the customer's premises, the program can be decoded and displayed in a medium quality. In addition, the second enhancement layer needs to be received by the set-top-box in order to present the full range of quality (audio and/or video) to the customer.

In a next embodiment, the data is further structured and/or marked according to its content. In particular, at least one of the following criteria may be utilized to differentiate between contents or type of programs:
- Pay-TV;
- Video-on-Demand;
- Free-TV;
- Commercial-TV.

Hence, the hierarchical configuration as well as the content or type of program may be utilized in order to assign a priority. As an example, such priority can be assigned pursuant to the following function:
f (BL, ELᵢ; Content) → P
with
- BL: base layer;
- ELᵢ: enhancement layer i (there may be none, one or more enhancement layers i = 1, 2, ...);
- Content: or "type of program", referring to the type of program that is utilized for prioritization purposes;
- P: a priority identifier that can in particular be "understood" by the network, in particular by the network components throughout the network.

The priority identifier P may be utilized in particular for routing purposes throughout the network. Preferably, the network (or a network component of the network) may decide upon the value of P whether to drop a packet or to forward it upon the bandwidth available in the network, in particular towards the next network element.

Hence, it is an embodiment that the data is mapped to a priority based on the hierarchical configuration and its content.

Pursuant to another embodiment, the data is prioritized by assigning Quality-of-Service information.

This is in particular useful as the network (e.g., network components of said network) knows and understands QoS-classes and may convey and/or forward traffic across the network according to QoS values. Therefore, QoS values may preferably be used as values for P as stated above.

According to an embodiment, the hierarchical configuration comprises/is a scalable video coding (SVC).

According to another embodiment, the data is processed in a video server or in a video encoder or in a marking device.

The data may in particular be processed in every kind of device comprising a marking capability, in particular by utilizing (e.g., adding and/or setting) the priority identifier as described herein.

The problem stated above is also solved by a device comprising a processor unit that is equipped / arranged such that the method as described is executable on said processor unit.

In yet an embodiment, said device is a network element, in particular a video server, a video encoder or a marking device.

According to a next embodiment, several streams of data are fed to the device.

Various streams of data, in particular video and/or audio can be fed to the device and processed by it. The device may in particular utilize, e.g., add and/or set the priority identifier to the respective streams of data and forward the streams to their destinations, e.g., to the set-top-boxes at the customers' premises.

The problem stated supra is also solved by a communication system comprising the device as described herein.

Embodiments of the invention are shown and illustrated in the following figures:
- Fig.1: shows an example of two pictures of a hierarchical ("progressively coded" or "scalable") video stream;
- Fig.2: visualizes prioritization of video data (also comprising audio data) of different types or content, i.e. Pay-TV, Video-On-Demand, Free-TV, Commercial-TV, wherein each content comprises a base layer and an enhancement layer;
- Fig.3: shows another example of prioritization of video data, wherein each content comprises a base layer and two enhancement layers EL1 and EL2;
- Fig.4: shows a different example of prioritizing video data of various content and various hierarchical structure;
- Fig.5: shows an exemplary network architecture for conveying video data from various servers to a customer's set-top-box;
- Fig.6: is based on Fig.5 and visualizes two communication paths from different video servers to two set-top-boxes at the customer's premises, wherein the connection between DSLAM and DSL modem has bandwidth limitation and therefore requires modified routing, in particular dropping of enhancement layers for each video stream.

The concept of this approach allows in particular to continuously supply video services with an acceptable quality even in case of bandwidth shortage. This can be achieved without any need to alter an existing signaling concept of Scalable Video Coding (SVC) or of the network itself.

### Details on SVC

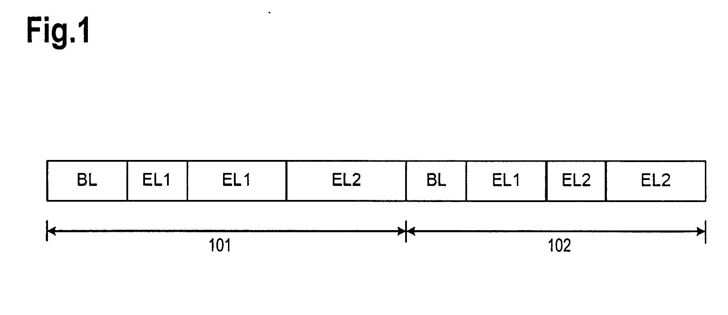

SVC provides a video service comprising several levels of quality. Each picture of a video stream may be divided into several quality levels, e.g., as follows:
- BL (base layer, base quality): Standard-definition resolution with 3 MBit/s;
- EL1 (enhancement layer 1, medium quality): High-definition (HD) resolution with medium quality; requires additional 5 MBit/s;
- EL2 (enhancement layer 2, high quality): High-definition (HD) resolution with high quality; requires additional 4 MBit/s.
   According to this example, the SVC service can be provided with data rates of 3 MBit/s, 8 MBit/s or 12 MBit/s.
   It is to be noted that further enhancement stages of various qualities and data rates can be implemented. The more single layers, the finer the levels of quality may be adjusted. This, however, comes at the cost of increasing configuration complexity.
   Video data of each single level may be conveyed in a consecutive order: First, the base layer, second, the first enhancement layer and third, the second enhancement layer. Data associated with each layer may be transmitted via one or more successive IP-/Ethernet packets. Such dividing of data may be due to maximum packet size constraints as specified by the individual network. An example of two pictures 101 and 102 of a scalable video stream is shown in **Fig.1****.**
   Visualizing the video stream without any enhancement layer results in a video of somewhat reduced quality, but without any deforming effects or interruptions. Hence, SVC efficiently utilizes a reduced bandwidth by still being able to convey and display the full video in real-time only at a reduced resolution/quality. Without SVC, significant portions of data would be lost or would not arrive in time at the receiver in case of bandwidth shortage. That would significantly impair the video stream to an extent that the video can no longer be visualized in real-time.
   Another advantage of SVC is the ability to adapt the SVC stream (and thus the video service) to requirements of particular terminals or devices at the user's premises as well as to the network environment. Pursuant to the base layer concept, a minimum quality is guaranteed, the streaming information can be provided in real-time.
   SVC is an example as how to hierarchically structure information, here video streams.

### Prioritization of video stream packets

Each packet of the SVC stream is either associated with the base layer BL or with one of the enhancement layers EL1 or EL2.

This approach suggests to, e.g., configure a video encoder as follows:

| Packet associated with ... | Priority |
|---|---|
| EL2 | 3 |
| EL1 | 2 |
| BL | 1 |

Hence, each packet associated with either layer EL2, EL1 or BL receives a priority 3, 2, 1, wherein "1" depicts the highest priority in this example.

The three priorities can then be mapped to network or traffic classes, wherein the network guarantees that packets highly prioritized are - in particular in case of a bandwidth shortage - conveyed prior to packets associated with lower priorities.

It is an option that if the network is aware of such bandwidth shortage, the network may only convey packets of high traffic classes, i.e. high priority and disregard packets below a predetermined threshold, e.g., other priority than associated with priority 1. Hence, in a shortage of bandwidth, only the base layer information may arrive at the receiver, packets related to enhancement information may be dropped.

This scheme, however, may be applicable in stages, i.e., first the enhancement layer EL2 is dropped because of the bandwidth bottleneck (i.e. due to a bandwidth availability below a first threshold value t1), next also the enhancement layer EL1 may be dropped due to further bandwidth restrictions (i.e. due to a bandwidth availability below a second threshold value t2, with t2 < t1).

The succession according to which packets shall be dropped may be implemented pursuant to a Quality-of-Service (QoS) configuration (e.g., according to queues, priorities and/or scheduling delays) of the network elements like IP routers, Ethernet Switches, DSLAMs and Home Gateways.

It is to be noted that preferably the network may be set up or dimensioned in a way that (even in worst case scenarios) the base layer can be conveyed to its respective destination(s).

As an alternative to the prioritization set forth on IP or Ethernet level, the data packets themselves may be prioritized. This may in particular be achieved by utilizing a "priority_id" field within the header of the video packet. Hence, the "priority_id" field can determine a priority or importance of a single video packet thereby allowing to differentiate quality levels of single video packets. This alternative requires the network elements (e.g., IP router, switches) to be capable of understanding, analyzing and mapping the video packets.

### Network performance in case of bandwidth shortage

During normal operation (no bandwidth restriction or shortage), packets arrive at their destinations, e.g., set-top-boxes (STBs) at the customers' premises. Video data is assembled by the data streams (of various base/enhancement layers) timely arriving at the STBs. Video data is displayed in its full resolution and quality (hence, according to the example given above: BL + EL1 + EL2).

In case a bandwidth shortage occurs at an arbitrary location within the network, packets may get lost. The Quality-of-Service (QoS) configuration as described above (i.e. mapping of video packets to priorities that are further translated to QoS-classes of the network) guarantees that video data of the base layer (BL) and the first enhancement layer (EL1) still reach their destination(s), i.e. STBs, whereas video data of the second enhancement layer (EL2) only partially arrives at the associated recipient(s).

As the receiving device, e.g., as the set-top-box is capable of decoding streams that are encoded pursuant to SVC, the base layer (BL) and the first enhancement layer (EL1) arriving are sufficient to decode and display the video with slight losses of quality (because of the partially missing second enhancement layer EL2).

In case the bandwidth shortage increases, less data can be successfully conveyed by the network. According to the example, even the first enhancement layer may no longer be transmitted to the STBs and the STBs may display the video stream of the base layer only.

If the base layer (BL) cannot be transmitted because of further deterioration of the available bandwidth, the video service as such may no longer be available. Such a situation, however, should be highly unlikely, as the network shall be dimensioned in a way that the base layer video service is available for the customer at a considerably high probability - even in a worst case scenario of bandwidth shortage.

In particular in broadcast applications, several video streams (i.e. several IPTV stream) may be provided at identical quality stages as well as with equal priority information. Such video streams may have to be routed through the network to several recipients. In such scenarios no service has to be terminated as long as another service still exists with a higher quality as the base quality.

It is a particular solution provided with the approach presented that distinct service may be preferred over other services. As an example, an enhancement layer of a Pay-TV or Video-on-Demand service can be assigned a higher priority compared to an enhancement layer of a Free-TV service or of a commercial service (Commercial-TV).

A particular example is set forth utilizing IP TOS Bits according to which three different priority levels for video streams are provided. Each video stream may be divided into two different quality classes, i.e., a base layer BL and an enhancement layer EL (in this example only one enhancement layer is provided for the video stream).

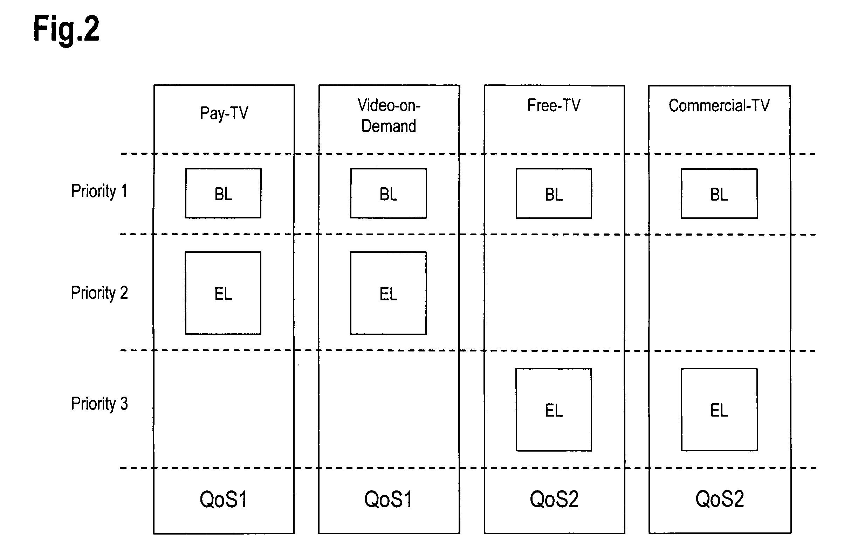

Fig.2 visualizes video data (also referred to video stream) of different content: Pay-TV, Video-On-Demand, Free-TV, Commercial-TV. Each such video stream is divided into a base layer BL and an enhancement layer EL. Three different priorities Priority1, Priority2 and Priority3 are assigned to the respective base layers and enhancement layers of the various contents in a way that in case of bandwidth shortage, enhancement layers of less important content (from a service provider's perspective) are dropped first (e.g., enhancement layers of Free-TV and Commercial-TV). In case of further bandwidth shortage, the enhancement layers for the remaining contents are dropped as well (e.g., enhancement layers of Pay-TV and Video-on-Demand). This approach, however, ensures according to the prioritization used that a base quality is conveyed for all various contents, i.e. the base layers for all contents are transmitted to their recipients.

Of course, other prioritization schemes may be applicable as well depending on the individual requirement of, e.g., the service provider and/or the network operator.

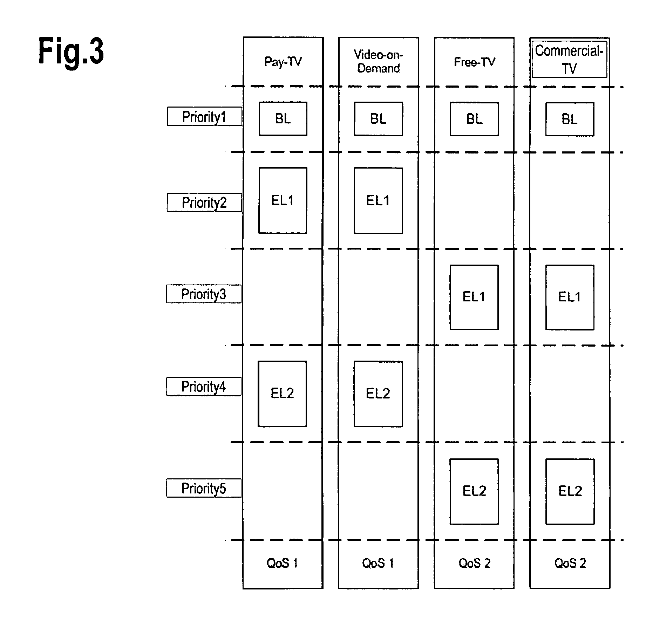

Fig.3 shows another example as how video data of four different contents, i.e., Pay-TV, Video-on-Demand, Free-TV, Commercial-TV, each comprising a base layer BL, a first enhancement layer EL1 and a second enhancement layer EL2, could be prioritized. As described above, in case of a bandwidth shortage, enhancement layers are successively dropped (first the second enhancement layers then the first enhancement layers) according to their priority. The following shows the succession of video packets to be dropped in case the available bandwidth decreases successively:
- EL2 of Free-TV and Commercial-TV;
- EL2 of Pay-TV and Video-on-Demand;
- EL1 of Free-TV and Commercial-TV;
- EL1 of Pay-TV and Video-on-Demand.

According to this example, the base layers of all contents are transmitted even in case of advanced bandwidth shortage.

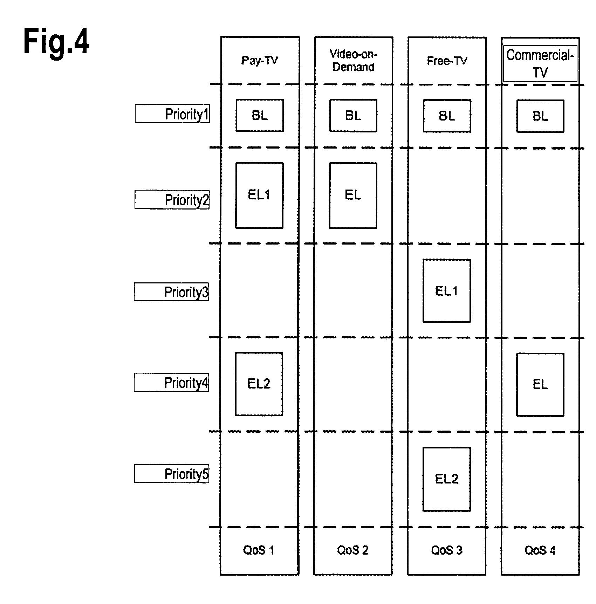

Fig.4 shows a further example of prioritizing four different contents, i.e., Pay-TV, Video-On-Demand, Free-TV, Commercial-TV, each content (or type of program) comprises a base layer BL, Pay-TV and Free-TV each comprise a first enhancement layer EL1 and a second enhancement layer EL2, Video-on-Demand and Commercial-TV each comprise one enhancement layer EL only.

According to the example of Fig.4, four different QoS-classes are utilized (QoS1, QoS2, QoS3 and QoS4) indicating that each single content or program has a different priority with respect to the other contents. Pursuant to this exemplary selection, a bandwidth shortage may result dropping layers of the various contents in the following order (increasing shortage assumed):
- EL2 of Free-TV;
- EL2 of Pay-TV and EL of Commercial-TV;
- EL1 of Free-TV;
- EL1 of Pay-TV and EL of Video-on-Demand.

It is to be noted that various prioritization schemes and mapping configurations may be chosen according to the approach provided herewith.

It is in particular an alternative to also drop a base layer of a particular content, e.g., Commercial-TV. This, however, is within the sphere of the content or service provider to decide.

### Further Advantages

The approach provided can be efficiently combined with broadcast/multicast services (e.g., broadcast TV) as well as with unicast services like Video-on-Demand.

Bottlenecks or shortages within the whole network are treated adequately, i.e., the respective shortage may occur in various network elements, e.g., home network, DSL link, access area, aggregation area or backbone.

SVC may be merely supported at the encoder as well as at the decoder thereby allowing existing networks to transparently handle the data (e.g., video streams) conveyed. Hence, no changes are required to existing network components beyond the encoder and decoder. The mapping to QoS-classes allows existing network elements to support the scheme of prioritizing progressive or hierarchically encoded content of various kinds (e.g., video and/or audio and/or other data). Hence, this concept can also be implemented in a multi-vendor environment.

Another advantage is the fact that due to the hierarchical coding scheme, a data reduction can be achieved (at the cost of quality) and additional services (e.g., IPTV streams) may be started without the necessity of dropping services that are already running. However, a minimum quality level of, e.g., the video stream can be ensured by the base layer that shall still arrive at the customer's premises.

### Exemplary network architecture

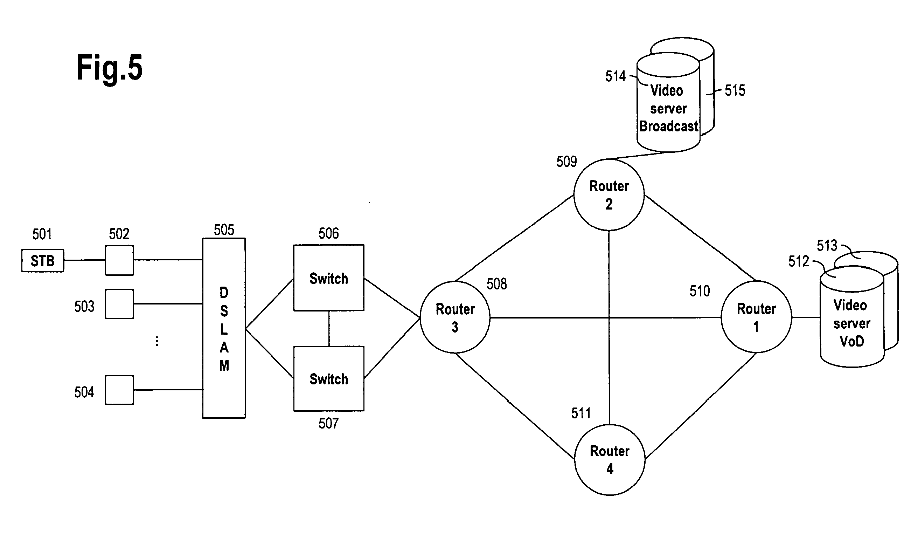

Fig.5 shows an example of a network as it may be hosted by a provider. Video servers 514 and 515 providing broadcast television are connected to a Router 509. Video servers 512 and 513 providing Video-on-Demand video streams are connected to a router 510. The router 509 is connected to the router 510 and to a router 508 as well as to a router 511. The routers 508, 510 and 511 are each also connected to the respective other routers.

The router 508 is connected to a switch 506 and to a switch 507, said switches are further connected with one another and with a DSLAM 505. The DSLAM 505 supplies several modems 502, 503 and 504, wherein - as an example - a set-top-box STB 501 is connected to the modem 502.

Video traffic is fed via video servers 512 to 515 into the network. Preferably, the various video servers are connected to the network at different locations. Each video server 512 to 515 processes the SVC streams as described herein. This is in particular done by utilizing, e.g., adding and/or setting, a priority identifier. On its way to the set-top-box STB 501, a video packet is routed through the network passing the respective network components, each of which may prioritize the video packet that is conveyed through the network by utilizing said priority identifier. The set-top-box STB 501 assembles the video stream from video packets arriving. Video streams that arrive at least partially at the set-top-box STB 501 may be used for processing the video to be displayed. It is also possible that portions of an enhancement layer (i.e., not the full information associated with the particular enhancement layer) arriving at the set-top-box STB 501 can be utilized for improving the video quality.

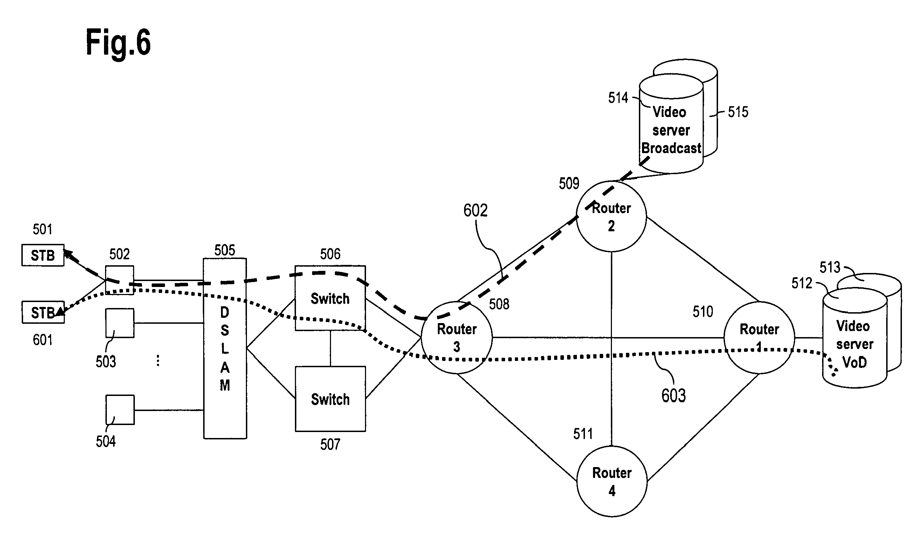

A particular scenario may be as follows (see Fig.6): A single home is connected to the network of the provider via a 16 Mbps DSL line and has two set-top-boxes STB 501 and 601 (or television devices with such set-top-box functionality).

A service provider supplies broadcast television as well as Video-on-Demand services. In this particular example, three different layers are utilized for each content, i.e., a base layer with 3 Mbps, a first enhancement layer with additional 5 Mbps and a second enhancement layer with additional 4 Mbps. As long as one set-top-box STB 501 is in use (broadcast TV), a video stream with full quality (12 Mbps) can be watched.

In case the second set-top-box STB 601 is also used (Video-on-Demand), the network provides two video streams of full quality to the DSLAM. However, the capacity of the DSL in this example is limited to 16 Mbps. Hence, only two video streams at 8 Mbps can be forwarded by the DSLAM, which corresponds to the base layer and the first enhancement layer for each stream. As a result, each set-top-box STB 501 and 502 decodes video streams of medium HDTV quality.

In Fig.6, also a video stream for broadcast TV 602 and a video stream for Video-On-Demand 603 are shown.

## Claims

1. A method for processing data, wherein said data comprises a hierarchical configuration, the method comprising the step:
- the data is prioritized at least according to its hierarchical configuration;
- the data is prioritized by utilizing a priority identifier;
- the data is conveyed through a network utilizing said priority identifier.

2. The method according to claim 1, wherein a signaling based on the priority identifier is conducted by a network.

3. The method according to any of the preceding claims, wherein said network is a packet-oriented network.

4. The method according to any of the preceding claims, wherein the data comprises audio and/or video data.

5. The method according to any of the preceding claims, wherein the hierarchical configuration comprises a base layer and at least one enhancement layer.

6. The method according to any of the preceding claims, wherein the data is further structured and/or marked according to its content.

7. The method according to claim 6, wherein the content comprises at least one of the following criteria:
- Pay-TV;
- Video-on-Demand;
- Free-TV;
- Commercial-TV.

8. The method according to any of the claims 6 or 7, wherein the data is mapped to a priority based on the hierarchical configuration and its content.

9. The method according to any of the preceding claims, wherein the data is prioritized by assigning Quality-of-Service information.

10. The method according to any of the preceding claims, wherein the hierarchical configuration comprises a scalable video coding.

11. The method according to any of the preceding claims, wherein the data is processed in a video server or in a video encoder or in a marking device.

12. A device comprising a processor unit that is arranged such that the method according of any of the preceding claims is executable on said processor unit.

13. The device according to claim 12, wherein said device is a network element, in particular a video server, a video encoder or a marking device.

14. The device according to any of the claims 12 or 13, wherein several streams of data are fed to the device.

15. Communication system comprising the device according to any of claims 12 to 14.
